# EUROPEAN PATENT APPLICATION

(11) **EP 4 786 816 A1**
(43) Date of publication of application: **05.08.2026**
(21) Application number: 24870294.6
(22) Date of filing: 28.08.2024
(51) Int. Cl.: F16F 9/06

(54) **SHOCK ABSORBER, SUSPENSION SYSTEM AND VEHICLE**

(30) Priority: 28.09.2023 CN 202311288132
(71) Applicant: BYD Company Limited, Shenzhen, Guangdong 518118 (CN)
(72) Inventor: LU, Jieyu, Shenzhen, Guangdong 518118 (CN); LUO, Jiarong, Shenzhen, Guangdong 518118 (CN); ZHOU, Huini, Shenzhen, Guangdong 518118 (CN); LU, Yinbo, Shenzhen, Guangdong 518118 (CN)
(74) Representative: Mathys & Squire
(86) International application number: PCT/CN2024/115174
(87) International publication number: WO 2025/066748

(57) **Abstract**

Provided are a shock absorber, a suspension system and a vehicle. The shock absorber comprises: a shock absorber cylinder (3) having a first space (8) and a second space (9); a piston valve (4), the piston valve (4) dividing the first space (8) into a first chamber (801) and a second chamber (802); a first damping valve (21), a first inlet (211) of the first damping valve (21) being in communication with the second chamber (802), and a first outlet (212) of the first damping valve (21) being in communication with the second space (9); a second damping valve (22), a second inlet (221) of the second damping valve (22) being in communication with the second space (9), and a second outlet (222) of the second damping valve (22) being in communication with the second chamber (802); and a compression module (103), the compression module (103) dividing the second chamber (802) into a first sub-chamber (109) and a second sub-chamber (110), and the second sub-chamber (110) being used for storing gas.

## Description

### CROSS-REFERENCE TO RELATED APPLICATIONS

The present disclosure is based on the Chinese patent application with application number 202311288132.4 and filing date September 28, 2023, and claims priority to the said Chinese patent application. The entire content of the said Chinese patent application is incorporated herein by reference.

### FIELD

The present disclosure relates to the field of automotive technology, and in particular to a shock absorber for a suspension system, a suspension system and a vehicle.

### BACKGROUND

As a protective and shock-absorbing device for vehicles, the suspension system adopts elastic elements to absorb vibrations generated by impacts during vehicle operation. In order to improve driving smoothness, a shock absorber can be installed in parallel with the elastic elements in the suspension system. Its working principle is that when relative motion occurs between the frame (or vehicle body) and the axle due to vibration, the piston inside the shock absorber moves up and down, and the oil in the shock absorber chamber repeatedly flows from one chamber to another through different openings. At this time, the friction between the opening walls and the oil, as well as the internal friction between oil molecules, forms a damping force on the vibration, converting the vehicle's vibration energy into oil thermal energy, which is then absorbed by the shock absorber and dissipated into the atmosphere.

However, the shock absorber in the prior art is a three-tube structure, in which the oil and gas are in the same space. This structure is prone to generating bubbles, leading to problems such as unstable damping force output and low response speed of piston movement at the moment of impact. This phenomenon causes the suspension system to be unable to accurately control the smoothness of the vehicle's driving, making it difficult to improve comfort.

Therefore, it is necessary to improve the existing shock absorber and optimize its buffering performance.

### SUMMARY

The present disclosure is intended to resolve one of technical problems in the related art at least to some extent.

To this end, one object of the present disclosure is to propose a shock absorber.

Another object of the present disclosure is to propose a suspension system.

Another object of the present disclosure is to propose a vehicle.

According to a first aspect of the present disclosure, a shock absorber is provided. The shock absorber includes: a shock absorber cylinder having a first space and a second space;
a piston valve, is slidably arranged along the first space and divides the first space into a first chamber and a second chamber, wherein the first chamber is in communication with the second space;
a first damping valve, includes a first inlet and a first outlet, wherein the first inlet is in one-way communication with the first outlet, the first inlet is in communication with the second chamber, the first outlet is in communication with the second space, and the first damping valve is configured to control the damping magnitude of communication from the second chamber to the second space;
a second damping valve, includes a second inlet and a second outlet, wherein the second inlet is in one-way communication with the second outlet, the second inlet is in communication with the second space, the second outlet is in communication with the second chamber, and the second damping valve is configured to control the damping magnitude of communication from the second space to the second chamber; and
a compression module, divides the second chamber into a first sub-chamber and a second sub-chamber, wherein the second sub-chamber is configured to store gas, such that the second sub-chamber can be compressed or expanded with changes in the pressure of the first sub-chamber.

According to a shock absorber provided in one embodiment of the present disclosure, through the arrangement of an air bag module, the oil and gas in the second chamber are separated. The compressive deformation capability of the air bag module is used to provide buffering for the compression of the piston, reducing the instability of the damping output of the shock absorber and improving the shock absorption performance of the shock absorber.

According to a second aspect of the present disclosure, a suspension system is provided, including the above-mentioned shock absorber.

The suspension system according to the present disclosure includes the above-mentioned shock absorber. Through the arrangement of the air bag module, the oil and gas in the second chamber are separated. The compressive deformation capability of the air bag module is used to provide buffering for the compression of the piston, reducing the instability of the damping output of the shock absorber and improving the shock absorption performance of the shock absorber, and thus enhancing the working performance of the suspension system.

According to a third aspect of the present disclosure, a vehicle is provided, equipped with the above-mentioned suspension system.

The vehicle according to the present disclosure is equipped with the above-mentioned suspension system, which improves the working performance of the vehicle.

The additional aspects and advantages of the present disclosure are partially provided in the following descriptions, some of which will become apparent from the following descriptions or may be learned from practices of the present disclosure.

### BRIEF DESCRIPTION OF THE DRAWINGS

FIG. 1 is a schematic structural diagram of a shock absorber in an embodiment of the present disclosure.
FIG. 2 is a partial enlarged view of FIG. 1.
FIG. 3 is a cross-sectional view of a partial structure of a shock absorber cylinder in an embodiment of the present disclosure.
FIG. 4 is a side view of a partial structure of a shock absorber cylinder in an embodiment of the present disclosure.
FIG. 5 is a schematic diagram of a partial structure of a shock absorber cylinder in an embodiment of the present disclosure.
FIG. 6 is an enlarged view of a partial structure of a shock absorber in another embodiment of the present disclosure.
FIG. 7 is a schematic side cross-sectional view of a floating piston provided in an embodiment of the present disclosure.
FIG. 8 is a partially enlarged cross-sectional view of a floating piston in a shock absorber cylinder provided in an embodiment of the present disclosure.
FIG. 9 is a structural schematic diagram of a piston ring of a floating piston provided in an embodiment of the present disclosure.
FIG. 10 is a structural schematic diagram of a piston body of a floating piston provided in an embodiment of the present disclosure.
FIG. 11 is a cross-sectional view of a floating piston in a shock absorber cylinder provided in an embodiment of the present disclosure.

### DETAILED DESCRIPTION

Various exemplary embodiments of the present disclosure are described in detail with reference to the accompanying drawings. It will be noted that unless otherwise specifically stated, the relative arrangements of components and steps, numerical expressions, and numerical values set forth in these embodiments do not limit the scope of the present invention.

Embodiments of the present disclosure will be described in detail below, and examples of the embodiments are shown in the accompanying drawings. The embodiments described below with reference to the accompanying drawings are exemplary and are only used to explain the present disclosure, and shall not be construed as limiting the present disclosure. Based on the embodiments in the present disclosure, all other embodiments obtained by those of ordinary skill in the art without making creative efforts shall fall within the protection scope of the present disclosure.

The features of the terms "first" and "second" in the specification and claims of the present disclosure may explicitly or implicitly include one or more of such features. In the description of the present disclosure, unless otherwise specified, the meaning of "plurality" is two or more. In addition, "and/or" in the specification and claims indicates at least one of the connected objects, and the character "/" generally indicates that the associated objects before and after are in an "or" relationship.

In the description of the present disclosure, it will be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and other terms indicating orientations or positional relationships are based on the orientations or positional relationships shown in the accompanying drawings. They are only for the convenience of describing the present disclosure and simplifying the description, and do not indicate or imply that the referred device or element must have a specific orientation, be constructed and operated in a specific orientation, and therefore shall not be construed as limiting the present disclosure.

In the description of the present disclosure, it will be noted that unless otherwise clearly specified and limited, the terms "install", "connect" and "link" will be understood in a broad sense. For example, it may be a fixed connection, a detachable connection, or an integral connection; it may be a mechanical connection or an electrical connection; it may be a direct connection, or an indirect connection through an intermediate medium, or internal communication between two elements. For those of ordinary skill in the art, the specific meanings of the above terms in the present disclosure will be understood according to specific circumstances.

It will be noted that similar reference numerals and letters denote similar items in the following drawings. Therefore, once an item is defined in one drawing, it is not necessary to further discuss it in subsequent drawings.

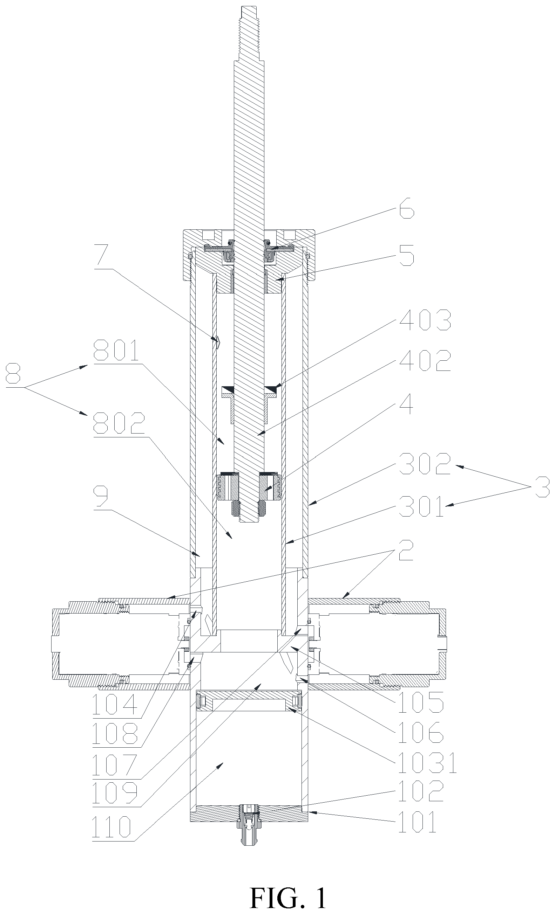

According to an embodiment of the present disclosure, a shock absorber is provided. Referring to FIG. 1 to FIG. 5, the shock absorber includes a shock absorber cylinder 3, a piston valve 4, a damping valve 2, and a compression module 103.

The shock absorber cylinder 3 may include an inner cylinder 301, an outer cylinder 302, and a third cylinder 1. The inner cylinder 301 forms a first space 8, and a second space 9 is formed between the inner cylinder 301 and the outer cylinder 302. The piston valve 4 is slidably disposed along the first space 8 and divides the first space 8 into a first chamber 801 and a second chamber 802, with the first chamber 801 in communication with the second space 9. The third cylinder 1 is butted at the ends of the inner cylinder 301 and the outer cylinder 302, and the third cylinder 1 is used to carry the damping valve 2 and the compression module 103. In the embodiment shown in FIG. 1 to FIG. 5, the present disclosure adopts an independent third cylinder 1. This embodiment facilitates the processing of the inner cylinder, the outer cylinder, and the third cylinder, and also enables the air bag module 1032 to be more conveniently disposed inside the third cylinder 1 and the damping valve 2 to be disposed on the third cylinder 1 during assembly. In other embodiments, the shock absorber cylinder 3 may also adopt an integrated structure to carry structures such as the air bag module 1032 and the damping valve 2, and the present disclosure does not limit the mandatory use of the third cylinder 1.

The damping valve 2 includes a first port and a second port. The first port is in communication with the second chamber 802, the second port is in communication with the second space 9, and the damping valve is used to limit the damping of medium flow between the second chamber 802 and the second space 9. In practical applications, the inner cylinder 301, the outer cylinder 302, and the damping valve 2 may be filled with oil. When the shock absorber is impacted, the piston valve 4 will move in the shock absorber cylinder 3. At this time, the oil will flow between the second space 9 and the second chamber 802 through the damping valve 2 to provide a buffering effect. The damping valve can limit the flow rate of the oil, thereby adjusting the magnitude of the buffering effect.

In an embodiment, the damping valve 2 may include a first damping valve 21 and a second damping valve 22. The first damping valve 21 includes a first inlet 211 and a first outlet 212, which correspond to the first port and the second port respectively. The first inlet 211 is in communication with the second chamber 802, and the first outlet 212 is in communication with the second space 9. The second damping valve 22 includes a second inlet 221 and a second outlet 222, which correspond to the first port and the second port of the second damping valve respectively. The second inlet 221 is in communication with the second space 9, and the second outlet 222 is in communication with the second chamber 802. The two damping valves may adopt one-way conduction to achieve more precise control of the damping force.

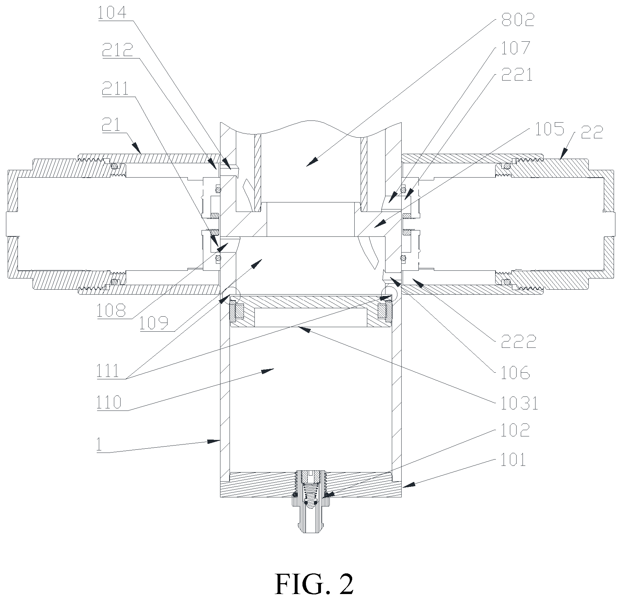

The compression module 103 is disposed inside the shock absorber cylinder 3 and forms a sealed fit with the inner wall of the second chamber 802. In the embodiment shown in FIG. 1 and FIG. 2, the compression module 103 is disposed inside the third cylinder 1.

The compression module 103 can jointly enclose a certain space with the second chamber 802. By forming a sealed butt joint or connection between its edge and the inner wall of the second chamber 802, it can divide the second chamber 802 into a first sub-chamber 109 and a second sub-chamber 110. In the solution shown in FIG. 1 and FIG. 2, the compression module 103 is an optional floating piston 1031. The second sub-chamber 110 is located below the floating piston 1031, that is, the space enclosed by the side of the floating piston 1031 away from the piston valve 4 and the inner wall of the second chamber 802 is the second sub-chamber. The second sub-chamber 110 is used for storing gas. When the piston valve 4 moves downward, the oil in the first sub-chamber 109 can squeeze the compression module 103, thereby compressing the gas in the second sub-chamber 110 and reducing the space of the second sub-chamber 110.

Specifically, as shown in FIG. 1, the shock absorber cylinder 3 includes a third cylinder body 101. The inner cylinder 301 and the outer cylinder 302 in the shock absorber are fixedly butted with the lower end (second end) of the third cylinder body 101, and the damping valve 2 is connected to the peripheral side of the third cylinder body 101. A first space 8 is formed by the inner cylinder 301 and the space inside the third cylinder body 101, and a second space 9 is formed by the inner cylinder 301 and the outer cylinder 302. The third cylinder body 101, together with the oil seal assembly 6 and the guide assembly 5 located at the upper end (first end) of the inner cylinder 301, can separate the first space 8 from the second space 9. The piston valve 4 is capable of sliding in the first space 8 and can divide the first space 8 into a first chamber 801 and a second chamber 802. The first chamber 801 is in communication with the second space 9, and the compression module 103 is disposed in the second chamber 802. The compression module 103 divides the second chamber 802 into a first sub-chamber 109 containing oil and a second sub-chamber 110 not in contact with the oil, and the second sub-chamber 110 is used for storing gas.

The damping valve 2 may include a first damping valve 21 and a second damping valve 22, wherein the first damping valve 21 is a one-way compression damping valve, and the second damping valve 22 is a one-way rebound damping valve. In an optional embodiment, only one damping valve may also be used to provide damping effects for both the compression and rebound expansion processes.

When the shock absorber is compressed, the piston valve 4 moves downward in the first space 8, and more structures of the piston valve 4 enter the shock absorber cylinder 3. This compresses the space of the second chamber 802, resulting in an increase in the pressure of the second chamber 802 and the pressure of the first sub-chamber 109. The oil in the first sub-chamber 109 moves downward to compress or push the compression module 103, thereby compressing the gas in the second sub-chamber 110. At this time, the pressure of the first chamber 801 decreases, and the oil in the first sub-chamber 109 flows into the second space 9 through the first damping valve 21 and then into the first chamber 801, achieving a buffering and shock absorption effect.

When the shock absorber rebounds, the piston valve 4 moves upward in the first space 8, and the structure of the piston valve 4 gradually moves out of the shock absorber cylinder 3. The space of the second chamber 802 increases and the pressure decreases, and the pressure of the first sub-chamber 109 also decreases. At this time, the gas pressure in the second sub-chamber 110 is higher, causing the second sub-chamber 110 to expand, the compression module 103 to deform or move upward, and the oil in the first sub-chamber 109 to be squeezed by the compression module 103. In this state, since the piston valve 4 moves to the outside of the shock absorber cylinder 3, the pressure of the first chamber 801 increases. The oil in the first chamber 801 flows into the second space 9 and then into the first sub-chamber 109 through the second damping valve 22, achieving a rebound damping effect.

Thus, in the shock absorber according to the embodiment of the present disclosure, through the arrangement of the compression module 103, the oil in the first sub-chamber 109 and the gas in the second sub-chamber 110 are effectively separated. On one hand, when the piston valve 4 moves, the second sub-chamber 110 and the compression module 103 can deform first to respond to the impact force, improving the vibration response speed of the shock absorber. On the other hand, the oil-gas separation design can prevent gas from flowing in each chamber, reducing the possibility of unstable damping effect.

In an embodiment, the second damping valve 22 may also be a compression damping valve, in which case the first damping valve 21 is a rebound damping valve. In an embodiment, the damping valve 2 is connected to the peripheral side of the third cylinder body 101, which may be a fixed connection or a detachable connection. Those skilled in the art can select it according to actual needs, and the present disclosure does not impose specific limitations herein.

In addition, the inner cylinder 301 and the outer cylinder 302 in the shock absorber may form an integrated structure with one end of the third cylinder body 101, so that the shock absorber has higher structural strength and longer service life. Of course, the inner cylinder 301, the outer cylinder 302, and the third cylinder body 101 may also be manufactured separately and then welded, butted, and assembled into an integral structure to simplify the manufacturing difficulty and improve the manufacturing efficiency of the shock absorber.

It will be noted that the downward movement of the piston valve 4 in the first space 8 refers to the movement of the piston valve 4 closer to the compression module 103, and the upward movement of the piston valve 4 in the first space 8 refers to the movement of the piston valve 4 away from the compression module 103.

In one example, the compression module 103 is a floating piston 1031. The floating piston 1031 divides the second chamber 802 into a first sub-chamber 109 and a second sub-chamber 110, and the oil in the first sub-chamber 109 can push the floating piston 1031 to move so as to compress the gas in the second sub-chamber 110.

Specifically, as shown in FIG. 2, when the shock absorber is in a compressed state due to impact, the piston valve 4 moves downward and occupies more cylinder volume. Since oil is hardly compressible, it can push the floating piston 1031 to move downward and compress the gas in the second sub-chamber 110, achieving a buffering and shock absorption effect. When the shock absorber is not impacted and the piston valve 4 is reset, the pressure in the first sub-chamber 109 decreases, and the air pressure in the second sub-chamber 110 is relatively higher. The second sub-chamber 110 pushes the floating piston 1031 to move upward to squeeze the first sub-chamber 109, and the oil in the first sub-chamber pushes the piston valve 4 to move upward and reduce the occupation of the cylinder volume, realizing reset.

In addition, the side of the floating piston 1031 away from the oil is a gas cylinder. The floating piston 1031 can effectively separate the oil from the gas in the gas cylinder, preventing the gas in the gas cylinder from entering the damping valve 2 and avoiding problems such as instantaneous fluctuations in damping force of the damping valve 2. It also makes the overall structure of the shock absorber simple, with less material usage, lighter weight and lower manufacturing cost.

The floating piston 1031 may optionally have a plunger-like structure, and an elastic sealing structure is provided on its side wall. The floating piston 1031 forms an interference fit with the inner wall of the second chamber 802 through the elastic sealing structure on the side wall. This compression and sealing form can effectively isolate the first sub-chamber 109 and the second sub-chamber 110 on both sides, avoiding gas-liquid mixing. Further, a sliding fit relationship can also be formed between the elastic sealing structure and the inner wall of the second chamber 802, that is, the floating piston 1031 can float up and down in the second chamber 802 to respond to the impact on the shock absorber by moving downward or upward.

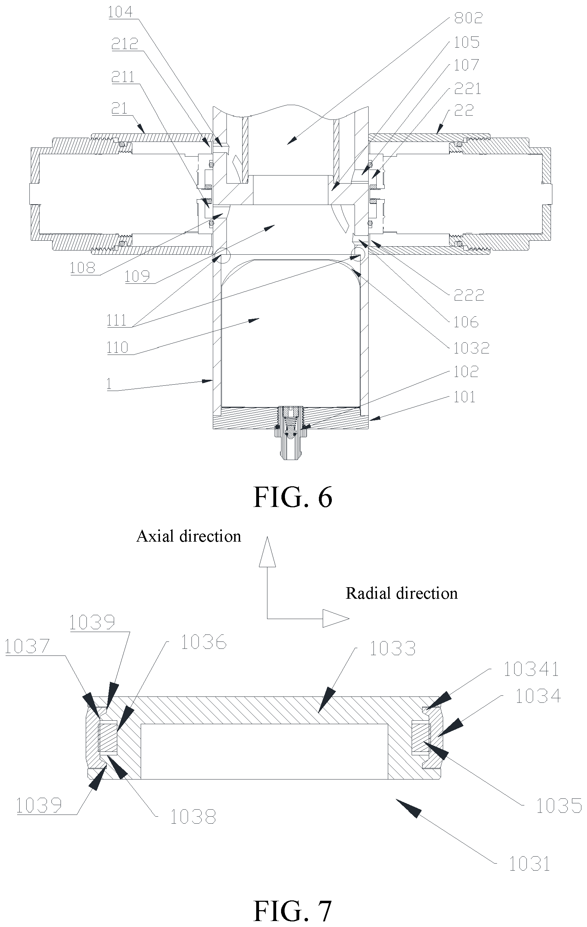

Optionally, in another embodiment, the compression module 103 is an air bag module 1032, as shown in FIG. 6. The air bag module 1032 can enclose a certain space, and by connecting its edge to the inner wall of the second chamber 802, it can divide the second chamber 802 into a first sub-chamber 109 and a second sub-chamber 110. In the solution shown in FIG. 6, the air bag module 1032 has a bag-like structure, and the second sub-chamber 110 is located in the space enclosed by the air bag module 1032. That is, the second sub-chamber 110 is the space enclosed by the air bag module 1032 and the inner surface of the lower end of the third cylinder 1. The second sub-chamber 110 is used for storing gas. The first sub-chamber 109 is located outside the air bag module 1032. When the piston valve 4 moves downward, the oil in the first sub-chamber 109 can squeeze the air bag module 1032, thereby compressing the gas in the second sub-chamber 110 and causing deformation of the air bag module 1032 and the second sub-chamber 110. The air bag module 1032 and the second sub-chamber 110 form a compressible and deformable air bag.

Specifically, when the shock absorber is in a compressed state, the piston valve 4 compresses downward to occupy the cylinder volume. Since oil is incompressible, it can squeeze the air bag module, thereby compressing the gas in the second sub-chamber 110 and achieving a buffering and shock absorption effect. The air bag module can compress the second sub-chamber 110 through elastic deformation, or deform due to its own soft material to cause the second sub-chamber 110 to be compressed.

In addition, the air bag module can effectively separate oil and gas, avoiding the problem of instantaneous fluctuations in damping force caused by gas entering the damping valve. It also makes the overall structure of the shock absorber simple, with less material usage, light weight and lower manufacturing cost.

It will be noted that the downward movement of the piston valve 4 in the first space 8 refers to the movement of the piston valve 4 closer to the air bag module 1032, and the upward movement of the piston valve 4 in the first space 8 refers to the movement of the piston valve 4 away from the air bag module 1032.

In other optional examples, the compression module 103 includes a first sub-chamber 109 and an accumulator located in the first sub-chamber 109. The accumulator has a second sub-chamber 110, the second sub-chamber 110 is used for storing gas, and the oil in the first sub-chamber 109 can compress the gas in the second sub-chamber 110.

Specifically, when the shock absorber is in a compressed state, the piston valve 4 compresses downward to occupy the cylinder volume. Since oil is incompressible, it can squeeze the accumulator to compress the gas in the second sub-chamber 110, achieving a buffering and shock absorption effect.

In addition, the accumulator can effectively separate oil and gas, avoiding the problem of instantaneous fluctuations in damping force caused by gas entering the damping valve. It also makes the overall structure of the shock absorber simple, with less material usage, light weight and lower manufacturing cost.

In one example, the third cylinder body 101 includes an oil inlet and an oil outlet, and the oil inlet and oil outlet are connected to the damping valve 2.

Specifically, as shown in FIG. 2, FIG. 3 and FIG. 4, the third cylinder body 101 is provided with two sets of oil inlets and oil outlets, including a first oil inlet 108, a first oil outlet 104, a second oil inlet 107, and a second oil outlet 106. When the first damping valve 21 is a compression damping valve and the second damping valve 22 is a rebound damping valve, the first oil inlet 108 is in communication with the first inlet 211, the first outlet 212 is in communication with the first oil outlet 104, the second oil inlet 107 is in communication with the second inlet 221, and the second outlet 222 is in communication with the second oil outlet 106, so as to realize the separate connection of the damping valve 2 with the second space 9 and the second chamber 802.

Thus, in the shock absorber according to the embodiment of the present disclosure, through the arrangement of the oil inlet and oil outlet, the damping valve 2 can conveniently exert its damping effect, which improves the use effect of the shock absorber and simplifies the overall structure of the shock absorber. The compression damping valve can control the on-off and damping magnitude of the first inlet 211 and the first outlet 212, and the rebound damping valve can control the on-off and damping magnitude of the second inlet 221 and the second outlet 222, so as to further improve the use effect of the shock absorber.

In an embodiment, the second chamber 802 of the shock absorber cylinder 3 may be provided with a limiting structure. In an optional solution of the present disclosure, the limiting structure is formed in the third cylinder body. The limiting structure is used to limit the deformation and movement of the compression module 103, preventing it from excessively increasing the volume of the second sub-chamber 110. This limitation helps to restrict the maximum stroke range of the piston valve 4 and enables the shock absorber to play a buffering role during the rebound and stretching stages. When the pressure in the second sub-chamber 110 is greater than that in the first sub-chamber 109, the limiting structure can limit the deformation amount of the compression module 103 or the maximum upward movement position thereof.

Along the moving direction of the piston valve 4, i.e., the vertical direction in FIG. 1, FIG. 2 and FIG. 6, the limiting structure is located on the side of the first port and the second port that is remote from the piston valve. This feature means that the limiting structure is located below the first oil inlet 108, the first oil outlet 104, the second oil inlet 107, and the second oil outlet 106. The advantage of this feature is that oil flows at the first port and the second port; if the compression module 103 expands upward and moves to this area, it will hinder the movement of oil and may cause damage to the compression module 103 due to oil flow and pressure changes. Therefore, in order to prevent the function of the second sub-chamber 110 from being affected and ensure its reliability, the present disclosure arranges the limiting structure on the side of the first port and the second port that is remote from the piston valve, so as to avoid mutual interference between the air bag module 1032 and the ports.

In one example, the limiting structure is a limiting step 111 formed on the inner wall of the second chamber 802, and the limiting step 111 is located on the side of the oil inlet and the oil outlet that is remote from the piston valve 4.

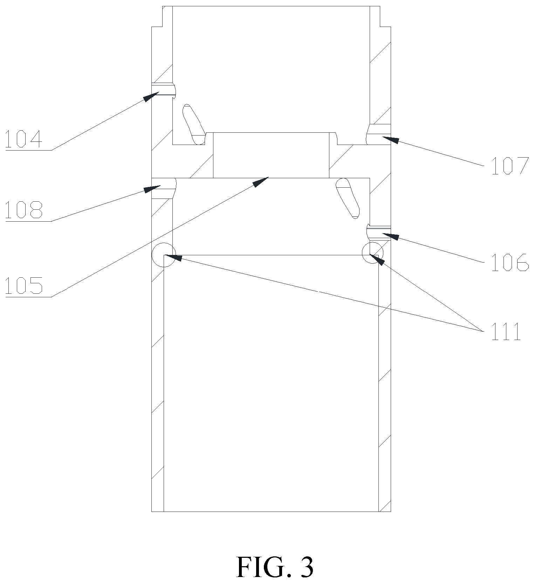

Specifically, as shown in FIG. 2 and FIG. 3, the limiting step 111 can effectively restrict the floating piston 1031 from being squeezed upward to an excessively high position by the gas in the second sub-chamber 110, preventing the floating piston 1031 from being squeezed too much and causing blockage of the oil inlet and the oil outlet. When the air pressure in the second sub-chamber 110 is greater than that in the first sub-chamber 109, the compression module 103 can abut against the limiting step 111 after moving upward and expanding, thereby being unable to move further upward. The limiting step may be an annular step distributed annularly on the inner wall of the second chamber 802, or a plurality of step surfaces distributed discretely. Through this design, it can effectively block the movement of the compression module 103. For example, when the compression module is a floating piston 1031, after the floating piston 1031 moves upward to a certain position, the limiting step can catch the edge of the floating piston 1031, thereby preventing the floating piston 1031 from continuing to move upward, which also limits the maximum volume of the second sub-chamber 110.

In addition, the limiting step 111 also effectively prevents the compression module 103 from being damaged due to excessive movement, avoids the failure of oil-gas separation in the shock absorber, and further ensures the sealing performance of the compression module 103.

In one example, the second sub-chamber 110 is provided with a communication channel 102 for inflating the second sub-chamber 110.

Specifically, as shown in FIG. 1 and FIG. 2, the communication channel 102 may be an inflation nozzle. Through the inflation nozzle, gas with a certain pressure can be pre-charged into the second sub-chamber 110 to facilitate the realization of buffering, shock absorption and rebound damping of the shock absorber. The arrangement of the communication channel 102 can, on the one hand, facilitate the second sub-chamber 110 to have a predetermined pressure; on the other hand, it can also adjust the buffering performance and response rate of the entire shock absorber through real-time or non-real-time air pressure control, so that the shock absorber can exhibit ideal performance.

In an embodiment, a one-way valve structure may be provided on the communication channel 102. The one-way valve structure enables the communication channel 102 to realize the function of gas transmission from the outside to the inside of the shock absorber cylinder 3, achieving inflation adjustment. In another optional embodiment, a switch control valve structure may also be provided in the communication channel 102. The switch control valve can control the on-off of the communication channel 102. This embodiment, combined with a timely controllable on-off relay and a timely gas charging and discharging device, can realize timely control of the shock absorber. Taking the application on an actual vehicle as an example, the vehicle can adjust the stiffness, response sensitivity, and height (stroke) of the shock absorber according to the current road conditions or the user's control, thereby achieving a better driving experience.

As shown in FIG. 1, FIG. 2, and FIG. 6, the compression module 103 may be a floating piston 1031 or an air bag module 1032, and the inflation device 102 is an inflation nozzle. The inflation nozzle can pre-charge gas with a certain pressure into the gas cylinder to fill the second sub-chamber 110. Of course, when the compression module 103 includes an accumulator, the inflation device 102 may also be an inflation valve. Those skilled in the art can select it according to actual needs, and the present disclosure does not impose specific limitations herein.

Optionally, in the embodiment shown in FIG. 1 to FIG. 2, the present solution adopts an inner cylinder 301 and an outer cylinder 302 to form the first space 8 and the second space 9. The outer cylinder 302 surrounds the inner cylinder 301. The first space 8 is a cylindrical cavity in the inner cylinder 301, and the second space 9 is a cylindrical cavity between the outer cylinder 302 and the inner cylinder 301. The cylindrical cavity may be a cylindrical cavity, an elliptical cylindrical cavity, or a prismatic cylindrical cavity, which is not limited in this solution. In other optional embodiments, the first space and the second space may not be formed by inner and outer cylinders, but may also be formed by multiple independent cylinders or by segmentally utilizing the cylinder space. Optionally, an inner cavity hole 7 is provided on the inner cylinder 301, and the first chamber 801 is in communication with the second space 9 through the inner cavity hole 7.

In one embodiment, the piston valve 4 forms a sealed contact with the inner surface of the inner cylinder 301, thereby separating the first chamber 801 and the second chamber 802. The piston valve 4 can move up and down in the shock absorber cylinder 3.

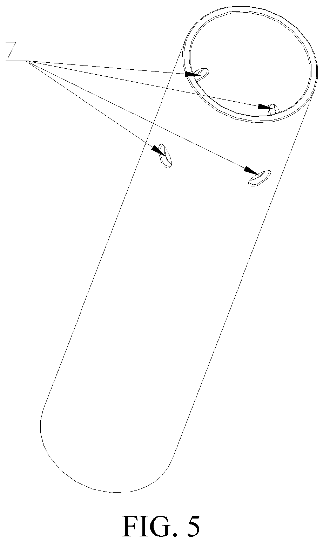

Specifically, as shown in FIG. 2 and FIG. 5, along the moving direction of the piston valve 4, the inner cavity hole 7 is arranged at a position higher than the maximum rebound position of the shock absorber, that is, the inner cavity hole 7 is always located on the side of the piston valve 4 away from the second chamber 802. Moreover, the piston valve 4 will not overlap with the inner cavity hole 7. This can ensure that the oil can smoothly flow from the first chamber 801 to the second space 9 through the inner cavity hole 7 when the shock absorber rebounds, and also effectively prevent the inner cavity hole 7 from damaging the sealing rubber of the piston valve 4.

In one example, a plurality of inner cavity holes 7 are provided along the circumferential direction of the inner cylinder 301.

Specifically, as shown in FIG. 5, four inner cavity holes 7 are preferably provided, and the four inner cavity holes 7 are arranged around the inner cylinder 301 along the circumferential direction, which helps the oil to flow quickly between the first chamber 801 and the second space 9.

Of course, the number of inner cavity holes 7 may also be one, two, or three. Those skilled in the art can select it according to actual needs, and the present disclosure does not impose specific limitations herein.

For the summary of embodiments where the compression module 103 is an air bag module 1032, an optional embodiment is that the air bag module 1032 is cylindrical - specifically, the middle of the air bag module 1032 is recessed downward, and the part close to the side wall of the third cylinder body is protruded upward.

Specifically, the cylindrical air bag module 1032 can better cooperate with the piston valve 4. On one hand, when the air bag module 1032 expands, it is easier to form reliable and stable limiting. On the other hand, due to the central recess of the cylindrical structure, it is more convenient to be fully compressed by the oil in the first sub-chamber 109, and exhibits more sensitive performance during compression.

In one example, a partition plate 105 is formed on the third cylinder body 101, and the partition plate 105 is used to isolate the second chamber 802 from the second space 9.

Specifically, as shown in FIG. 1 to FIG. 4, along the vertical movement direction of the piston valve 4, the partition plate 105 is located at the lowermost end of the outer cylinder 302. That is, it is at the end of the outer cylinder 302 close to the second chamber 802. The partition plate 105 closes the lower end of the second space 9 and isolates the second chamber 802 from the second space 9, so that the damping valve 2 can control the damping magnitude of the first inlet 211, the first outlet 212, the second inlet 221, and the second outlet 222, realizing buffering, shock absorption and rebound damping effects.

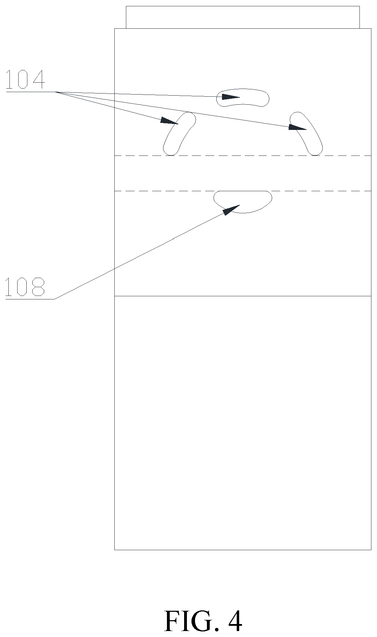

As shown in FIG. 4, the partition plate 105 can also isolate the oil inlet and oil outlet located on the same side. For example, the partition plate 105 can isolate the first oil inlet 108 from the first oil outlet 104, and isolate the second oil inlet 107 from the second oil outlet 106, enabling the damping valve 2 to control the damping magnitude of the first inlet 211, the first outlet 212, the second inlet 221, and the second outlet 222, thereby achieving buffering, shock absorption and rebound damping effects.

In addition, the oil inlet and oil outlet located on the same side of the partition plate are preferably one large oil inlet and three small oil outlets, so as to realize the buffering, shock absorption and rebound damping of the shock absorber.

In an embodiment, as shown in FIG. 1, a guide assembly 5 is covered on the first end (i.e., the upper end) of the shock absorber cylinder 3. A part of the guide assembly 5 is embedded in the inner cylinder 301, and the other part is embedded in the outer cylinder 302. The guide assembly 5 plays a role in relative positioning and fixing of the inner cylinder 301 and the outer cylinder 302. During actual assembly, the inner cylinder and the outer cylinder can be fixed on the third cylinder body by welding or other methods, and the guide assembly 5 cooperates to play a positioning role. Further, an insertion hole may be opened on the guide assembly 5 for cooperating with the piston valve 4.

In one example, the piston valve 4 further includes a limiting member 403, and the shock absorber may further include a piston rod 402.

Specifically, as shown in FIG. 1, the shock absorber includes a limiting member 403 and a piston rod 402 for guiding the piston valve 4. The piston valve 4 is fixedly connected to the end of the piston rod 402 close to the compression module 103, the limiting member 403 is fixedly connected to the piston rod 402, and the limiting member 403 is located on the side of the piston valve 4 away from the compression module 103. The piston rod 402 passes through the insertion hole on the guide assembly 5, so that the piston valve 4 and the limiting member 403 are inserted into the inner cylinder 301. The limiting member 403 can effectively prevent the piston rod 402 from coming out of the inner cylinder 301. When the external pressure of the shock absorber decreases, the piston valve will move outward and reset from the first end of the shock absorber cylinder; at this time, the limiting member 403 is configured to abut against the guide assembly 5 to limit the piston valve 4, preventing the piston valve 4 from coming out too much upward and avoiding the piston valve 4 overlapping with the inner cavity hole 7. The guide assembly 5 can perform multiple functions such as cylinder positioning, cooperative assembly, and limiting the piston valve 4.

In an embodiment, the piston valve 4 is movable between a first position and a second position in the shock absorber cylinder. When the piston valve 4 is located at the first position, the volume of the first chamber 801 is a first volume; when the piston valve 4 is located at the second position, the volume of the first chamber 801 is a second volume, and the first volume is greater than the second volume.

In an embodiment, when the piston valve 4 is located at the second position, the limiting member 403 abuts against the guide assembly 5 to limit the piston valve.

In an embodiment, when the piston valve 4 is located at the first position, the piston valve 4 abuts against the partition plate 105 to limit the piston valve. In the technical solution of the present disclosure, the partition plate 105 may be formed by the third cylinder body 101, which can form a flange partially extending into the inner surface of the inner cylinder 301. This flange can be used to cooperate with the piston valve 4 to achieve limiting.

In an embodiment, the limiting member 403 is fixed on the piston rod 402 in a sleeved manner, adopting a similar fixing method to the piston valve 4, resulting in a simple assembly process and consistent structural reliability. Moreover, when the sleeved limiting member 403 forms an abutment limit, it can exert a uniform limiting force on the piston valve 4 relative to the guide assembly 5, reducing the risk of offset and unsmooth movement of the piston valve 4.

Further optionally, the limiting member 403 may also be fixedly connected to the end of the piston rod 402 close to the compression module 103 to prevent the piston rod 402 from excessively compressing the first sub-chamber 109.

The guide assembly 5 is also used to guide the vertical movement of the piston rod 402 to improve the working efficiency of the shock absorber. The shock absorber further includes an oil seal assembly 6. As shown in FIG. 1, the oil seal assembly 6 is used to seal the first space 8 and the second space 9 to prevent oil leakage from the first space 8 and the second space 9.

For the specific arrangement positions of each oil outlet and oil inlet, the present solution provides an embodiment. As shown in FIG. 2 to FIG. 4, a first oil outlet 104 in communication with the second space 9 is formed on the outer cylinder 302, and the first oil outlet 104 is used for butting with the first outlet 212. In particular, the first oil outlet 104 may include a plurality of through holes, that is, the entire first oil outlet 104 is composed of a plurality of through holes. The first oil outlet 104 composed of a plurality of through holes can improve the smoothness of liquid flow. When the piston valve 4 moves, the instantaneous pressure change generated may be large. To respond to this pressure change, the damping valve 2 directs oil between the first sub-chamber 109 of the second chamber 802 and the second space 9. The plurality of through holes of the first oil outlet 104 can achieve rapid pressure relief and ensure smooth oil flow.

Further, a second oil outlet 106 in communication with the first sub-chamber 109 may be formed on the shock absorber cylinder 3. In the embodiment shown in FIG. 2 to FIG. 4, the second oil outlet 106 is opened on the structure of the third cylinder body 101 that constitutes the first sub-chamber 109. The second oil outlet 106 is butted with the second outlet 222, and the second oil outlet 106 may also include a plurality of through holes, which are used to provide a smooth liquid flow space when oil needs to flow from the second space 9 to the first sub-chamber 109.

In an embodiment, as shown in FIG. 3 and FIG. 4, the plurality of through holes of the first oil outlet 104 and/or the second oil outlet 106 may be arranged in an arc shape. This arrangement facilitates the smooth flow of oil, avoiding high hydraulic pressure concentrating in a small specific area and being unable to flow to low-pressure areas. The plurality of through holes arranged in an arc can disperse pressure, forming better pressure relief areas for oil in the regions corresponding to the first outlet 212 and the second outlet 222, thereby improving oil fluidity.

In an embodiment, a first oil inlet 108 in communication with the first sub-chamber 109 is formed on the shock absorber cylinder 3. The first oil inlet 108 is butted with the first inlet 221, and the first oil inlet 108 and the first oil outlet 104 are relatively located on the upper and lower sides of the partition plate 105. The positions of the first oil inlet 108 and the first oil outlet 104 on the upper and lower sides of the partition plate 105 are basically corresponding, and they are used to cooperate with the first damping valve 21. Correspondingly, as shown in FIG. 3, a second oil inlet 107 in communication with the second space 9 is formed on the outer cylinder 302. In an optional manner, the second oil inlet 107 is formed on the third cylinder body 101. The second oil inlet 107 is used for butting with the second inlet 221. The second oil inlet 107 and the second oil outlet 106 are distributed on both sides of the partition plate in a position-corresponding manner. The symmetrical distribution helps cooperate with the damping valve to control the oil.

In an embodiment, the air bag module 1032 may be made of an elastic film material, such as an elastic bladder. The edge of the elastic bladder may be fixedly connected to the inner wall of the third cylinder body 101 to form a sealed connection, thereby enclosing and forming the second sub-chamber 110. The elastic bladder can better realize elastic deformation, facilitating the compression and expansion of gas to match the compression and shock absorption effect of the shock absorber. As shown in FIG. 2, the second sub-chamber may be located on the second end of the entire shock absorber cylinder 3 away from the piston valve, i.e., at the lower end. This can keep the second sub-chamber 110 away from the piston valve 4 and the ports for oil circulation, reducing the possibility of the second sub-chamber 110 interfering with oil flow and the risk of damage to the second sub-chamber 110 and the air bag module 1032. Further, the communication channel 102 may also be located at the end of the second end of the shock absorber cylinder 3 to reduce the interference of gas charging and discharging on the oil area.

In other embodiments, the air bag module 1032 may also be made of other soft and easily deformable materials, preferably materials with good elastic deformation capability.

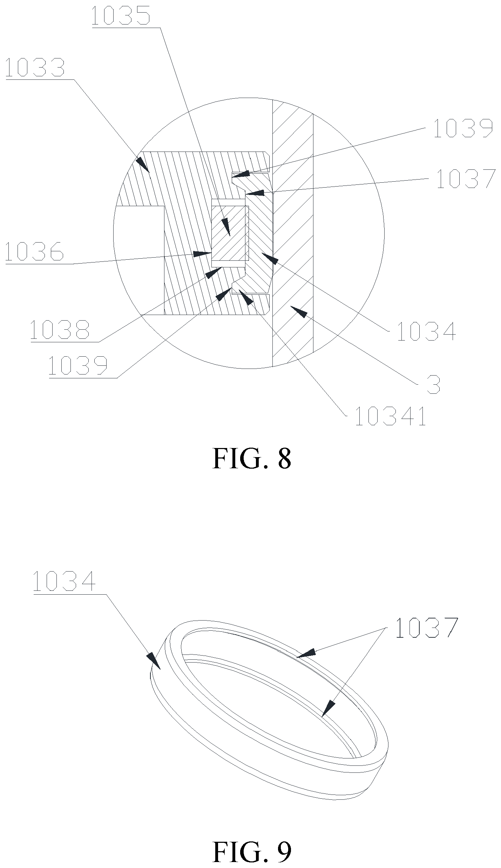

As shown in FIG. 7 and FIG. 8, the technical solution also provides an improvement of the floating piston, which can form a tight fit and seal with the inner wall of the shock absorber cylinder and float up and down along the cylinder to achieve piston performance.

The floating piston includes a piston body 1033, an elastic sealing ring 1035 and a piston ring 1034. The piston body 1033 has an overall flat cylindrical structure, and the side surface of the piston body 1033 refers to its outer circumferential cylindrical surface. An annular groove is formed on the side surface of the piston body 1033, and the annular groove is recessed toward the center along the radial direction of the piston body 1033. The annular groove is mainly used to provide a positioning, fixing and accommodating space for the elastic sealing ring 1035 and the piston ring 1034 sleeved around the piston body 1033. As shown in FIG. 7 and FIG. 8, the annular groove has a first groove bottom 1037 and a second groove bottom 1036, wherein the second groove bottom 1036 is located within the first groove bottom 1037. Moreover, along the radial direction of the piston body 1033, the overall depth of the second groove bottom 1036 is greater than that of the first groove bottom 1037. That is, as shown in FIG. 7, the second groove bottom 1036 is located inside the first groove bottom 1037, and the second groove bottom 1036 is more recessed toward the central axis of the piston body relative to the first groove bottom 1037, with the second groove bottom 1036 being deeper.

Optionally, in other embodiments, the piston body may also be in the form of an elliptical cylinder, a prismatic cylinder, etc., and its side wall represents a cylindrical surface, which is not limited in the present disclosure.

In this way, a step surface 1038 can be formed between the first groove bottom 1037 and the second groove bottom 1036, resulting in two layers of accommodating grooves. The accommodating groove formed by the step surface 1038 and the second groove bottom 1036 is used to accommodate the elastic sealing ring 1035, and the first groove bottom 1037 is used to carry the piston ring 1034 sleeved thereon.

The elastic sealing ring 1035 is embedded in the groove formed by the step surface 1038 and the second groove bottom 1036. The elastic sealing ring 1035 itself has a certain elastic deformation performance. As an example, the elastic sealing ring 1035 may be tightly fastened on the second groove bottom 1036 after being stretched, thereby improving its assembly reliability.

The piston ring 1034 is sleeved in the annular groove. As shown in FIG. 7 and FIG. 8, the piston ring 1034 covers the outside of the elastic sealing ring 1035 in the radial direction. Further, the inner surface of the piston ring 1034 is basically attached to the first groove bottom 1037. In particular, an interference fit is formed between the inner surface of the piston ring 1034 and the first groove bottom 1037 as well as the elastic sealing ring 1035, so that the inner surface of the piston ring 1034 can be closely attached to the first groove bottom 1037 and the elastic sealing ring 1035.

In practical applications, the diameter of the inner surface of the piston ring 1034 can be designed to be slightly smaller than that of the first groove bottom 1037, so that the piston ring 1034 can form a compressive interference fit with the first groove bottom 1037. Further, the diameter of the outer surface of the elastic sealing ring 1035 can be slightly larger than that of the first groove bottom 1037, and/or a part of the structure on the inner surface of the piston ring 1034 can be embedded into the area where the second groove bottom 1036 is located, that is, extending into the step surface 1038. Both of the above forms can form a compressive interference fit between the outer surface of the elastic sealing ring 1035 and the inner surface of the piston ring 1034.

By adopting the design of the technical solution, the piston ring 1034 and the elastic sealing ring 1035 form a two-layer nested structure. The inner elastic sealing ring 1035 is used to provide an elastic and pressing force, and exert a radially outward tightening effect on the piston ring 1034. The outer piston ring 1034 is used to form a compressive seal with the inner surface of the shock absorber cylinder and realize relative sliding. The two-layer nested structure can provide a more stable sealing effect. Further, the annular groove of the present solution is designed with two layers of groove structures, corresponding to the elastic sealing ring 1035 and the piston ring 1034 respectively. Combined with the interference fit, this design can provide good positioning and fixing effects for the elastic sealing ring 1035 and the piston ring 1034, avoiding risks such as fatigue, misalignment and detachment of the piston ring 1034 during long-term sliding fit with the shock absorber cylinder 3.

In an embodiment, the radial thickness of the elastic sealing ring 1035 is preferably greater than the height of the step surface 1038 between the second groove bottom 1036 and the first groove bottom 1037. That is, the elastic sealing ring 1035 protrudes slightly outward in the radial direction relative to the surface of the second groove bottom 1036. In this way, the piston ring 1034 can form compressive contact with the elastic sealing ring 1035 to achieve an interference fit without requiring a special-shaped structure on its inner surface. Moreover, this design enables the inner elastic sealing ring 1035 to better exert an outward pushing force on the piston ring 1034, providing enhanced sealing compression between the piston ring 1034 and the shock absorber cylinder 3.

In an embodiment, in the radial direction of the piston body 1033, the outer surface of the piston ring 1034 protrudes a short distance outward relative to the side wall of the piston body 1033. That is, the outer surface of the piston ring 1034 extends outward beyond the annular groove. This protruding dimension facilitates better compressive contact between the piston ring 1034 and the shock absorber cylinder 3 (as shown in FIG. 8), forming a sealed fit. Additionally, the outward protrusion of the piston ring 1034 protects the piston body 1033, reducing direct rigid friction and contact between the side wall of the piston body 1033 and the inner wall of the shock absorber cylinder 3, thereby improving the structural reliability and service life of the piston body 1033.

In particular, as shown in FIG. 7 to FIG. 10, an annular clamping groove 1039 may also be formed on the piston body 1033. Along the axial direction of the piston body 1033, the annular clamping groove 1039 may be formed on both sides of the first groove bottom 1037. Preferably, at least one annular clamping groove 1039 is formed on one side of the first groove bottom 1037. That is, as shown in FIG. 8 and FIG. 9, the annular clamping grooves 1039 may be formed on the upper side and/or lower side of the first groove bottom 1037.

The annular clamping grooves 1039 are used to provide further fixing and positioning for the piston ring 1034, preventing axial displacement relative to the piston body 1033 during piston movement. The piston ring may also be formed with protruding skirt edge 10341, and the positions of the skirt edge 10341 correspond to the positions of the annular clamping grooves 1039. If the annular clamping groove 1039 is formed only on one side of the first groove bottom 1037, a corresponding skirt edge 10341 is formed only on the corresponding side of the piston ring 1034. Further, in the embodiment where annular clamping grooves 1039 are formed on both sides of the first groove bottom 1037 (as shown in FIG. 7 to FIG. 10), the piston ring 1034 may be formed with two skirt edges 10341.

During actual assembly, the skirt edges 10341 can be embedded into the annular clamping grooves 1039, thereby achieving further relative positioning between the piston ring 1034 and the piston body 1033. The embodiment with annular clamping grooves 1039 on both sides of the first groove bottom is preferred: on one hand, it provides better positioning for the piston ring 1034; on the other hand, it facilitates the formation of an interference fit between the piston ring 1034 and the elastic sealing ring 1035. The compressive force from both sides of the two annular clamping grooves 1039 enables the inner surface of the piston ring 1034 to better contact and adhere to the outer surface of the elastic sealing ring 1035.

In an embodiment, as shown in FIG. 7, FIG. 8, and FIG. 11, the annular clamping groove 1039 may have an inclined wall surface. The skirt edge 10341 is provided with an inclined surface corresponding to the inclined wall surface. The inclined wall surface facilitates the assembly of the piston ring 1034, enabling it to more easily fit with the first groove bottom 1037 and the elastic sealing ring 1035. It avoids the skirt edge 10341 abutting against the first groove bottom 1037 during assembly, which would cause assembly difficulties.

On the other hand, as shown in FIG. 8, the inclined wall surface extends axially upward and downward, and the skirt edge 10341 fits closely with it. This design is more conducive to exerting an upward and downward tightening force on the piston ring 1034. Especially when the outer surface of the piston ring 1034 is squeezed by the shock absorber cylinder 3, the skirt edge 10341 on both sides generate outward turning forces and slight deformations, allowing the elastic sealing ring 1035 to form closer contact with the inner surface of the piston ring 1034 and ensuring the sealing effect.

In an embodiment, the piston ring is made of polytetrafluoroethylene (PTFE). As an industrial material, PTFE itself has good lubricating properties and can better form a sliding fit with metal surfaces. Using this industrial material for the piston ring is more conducive to forming a sliding fit with the shock absorber cylinder while ensuring sealing performance, preventing the media in the two chambers separated by the floating piston 1031 in the shock absorber cylinder from mixing with each other.

In an embodiment, as shown in FIG. 7 and FIG. 8, along the axial direction of the piston body 1033, the width of the elastic sealing ring 1035 may be slightly smaller than the width of the second groove bottom 1036. That is, a small gap is left on both sides of the elastic sealing ring 1035. This design provides a certain space for elastic deformation of the elastic sealing ring 1035. In practical application, the piston ring 1034 will form a compressive fit with the elastic sealing ring 1035, and the elastic sealing ring 1035 can deform into the gap enclosed by the second groove bottom 1036 and the step surface 1038, avoiding continuous high-pressure compression that may cause elastic fatigue. Moreover, the design of this gap allows the floating piston 1031 to have a certain self-adjustment space for elastic action when subjected to different degrees of pressure, helping to improve the overall piston movement performance of the floating piston 1031.

In an embodiment, along the radial direction, the thickness of the elastic sealing ring 1035 may be 105% to 120% of the height of the step surface 1038. As mentioned above, the thickness of the elastic sealing ring 1035 is slightly greater than the height of the step surface 1038. This design, preferably within a certain numerical ratio range, can exhibit a better elastic sealing effect. If the thickness of the elastic sealing ring 1035 is less than 105% of the height of the step surface 1038, the elastic force it outputs to the piston ring 1034 will be limited, and the elastic sealing effect cannot reach the optimal level. On the other hand, the thickness difference should not be too large. If the thickness of the elastic sealing ring 1035 exceeds 120% of the height of the step surface 1038, the elastic sealing ring 1035 may be subjected to continuous large compressive forces. This may cause the edge of the piston ring 1034 to not be well embedded in the annular groove, thereby reducing sealing reliability. Furthermore, prolonged exposure to large compressive forces may cause fatigue and aging of the elastic sealing ring 1035, impairing its service life. Therefore, the thickness difference between the two is preferably between 105% and 120%.

In an embodiment, as mentioned above, the outer surface of the piston ring 1034 protrudes a short distance outward relative to the side wall of the piston body 1033. The protruding dimension is preferably in the range of 0.05mm to 0.25mm. If the protruding dimension of the piston ring 1034 relative to the piston body 1033 is too large, the overall piston movement stability of the floating piston 1031 in the shock absorber cylinder 3 may decrease, and it may easily tilt or displace, affecting the movement performance of the shock absorber and other devices in which it is used. On the other hand, the protruding dimension should not be too small, otherwise, the sealing performance cannot be further improved. Additionally, the piston body 1033 may come into rigid frictional contact with the inner wall of the shock absorber cylinder 3. Long-term rigid frictional contact may affect the service life of the floating piston 1031 to a certain extent.

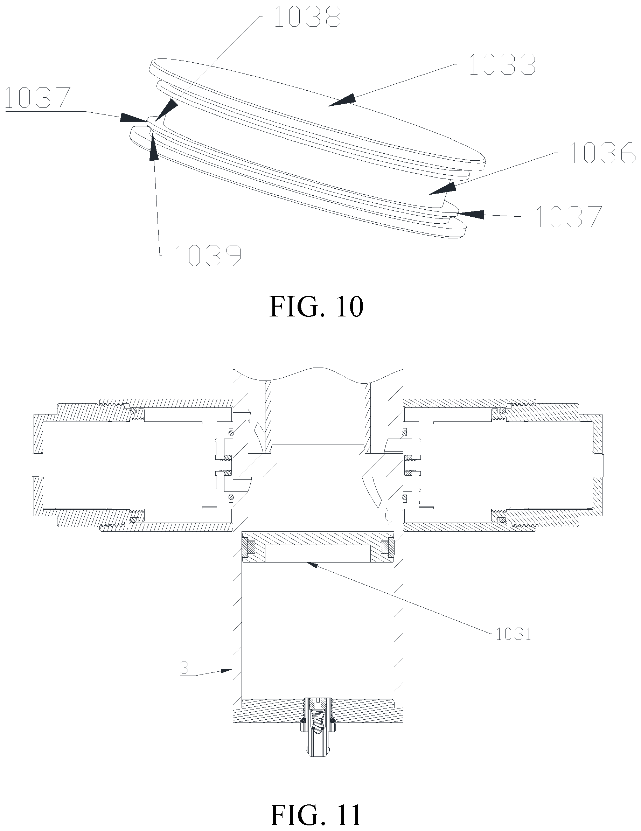

The technical solution also provides a shock absorber, which includes a shock absorber cylinder 3 and the above-mentioned floating piston 1031. As shown in FIG. 8 and FIG. 11, the floating piston 1031 is disposed in the shock absorber cylinder 3. The piston body 1033 and the shock absorber cylinder 3 are in a coaxial relative position, and the outer surface of the piston ring 1034 forms an interference fit with the inner wall of the shock absorber cylinder 3. The floating piston 1031 can float up and down in the shock absorber cylinder 3 to realize the function of piston movement. When the shock absorber is subjected to impact, the floating piston moves up and down to absorb the impact, achieving a shock absorption effect.

According to another embodiment of the present disclosure, a suspension system is provided, which includes the shock absorber described in the embodiments of the present disclosure.

According to another embodiment of the present disclosure, a vehicle is provided, which includes the suspension system described in the embodiments of the present disclosure.

The above embodiments focus on the differences between the various embodiments. As long as the different optimized features between the various embodiments are not contradictory, they can be combined to form a more optimal embodiment. Considering the conciseness of the text, no further details are provided herein.

Although some specific embodiments of the present invention have been described in detail through examples, those skilled in the art will understand that the above examples are only for illustration and not for limiting the scope of the present invention. Those skilled in the art will understand that the above embodiments can be modified without departing from the scope and spirit of the present invention. The scope of the present invention is defined by the appended claims.

## Claims

1. A shock absorber, comprising:
a shock absorber cylinder (3), having a first space (8) and a second space (9);
a piston valve (4), being slidably arranged along the first space (8) and dividing the first space (8) into a first chamber (801) and a second chamber (802), the first chamber (801) being in communication with the second space (9);
a first damping valve (21), comprising a first inlet (211) and a first outlet (212), the first inlet (211) being in one-way communication with the first outlet (212), the first inlet (211) being in communication with the second chamber (802), the first outlet (212) being in communication with the second space (9), the first damping valve (21) being configured to control the damping magnitude of communication from the second chamber (802) to the second space (9);
a second damping valve (22), comprising a second inlet (221) and a second outlet (222), the second inlet (221) being in one-way communication with the second outlet (222), the second inlet (221) being in communication with the second space (9), the second outlet (222) being in communication with the second chamber (802), the second damping valve (22) being configured to control the damping magnitude of communication from the second space (9) to the second chamber (802);
a compression module (103), dividing the second chamber (802) into a first sub-chamber (109) and a second sub-chamber (110), the second sub-chamber (110) being configured to store gas, such that the second sub-chamber (110) can be compressed or expanded with changes in the pressure of the first sub-chamber (109).

2. The shock absorber according to claim 1, wherein the compression module (103) is a floating piston (1031) movably disposed in the second chamber (802), the floating piston (1031) dividing the second chamber (802) into a first sub-chamber (109) and a second sub-chamber (110), when the pressure in the first sub-chamber (109) is greater than that in the second sub-chamber (110), the floating piston (1031) is configured to move to compress the second sub-chamber (110).

3. The shock absorber according to claim 2, wherein the floating piston (1031) comprising:
a piston body (1033), an annular groove is formed on a side surface of the piston body (1033), the annular groove has a first groove bottom (1037) and a second groove bottom (1036), the second groove bottom (1036) is located in the first groove bottom (1037), and along the radial direction of the piston body (1033), the depth of the second groove bottom (1036) is greater than that of the first groove bottom (1037) such that a step surface (1038) is formed between the second groove bottom (1036) and the first groove bottom (1037);
an elastic sealing ring (1035), being embedded in a groove formed by the step surface (1038) and the second groove bottom (1036);
a piston ring (1034), being sleeved in the annular groove, and an inner surface of the piston ring (1034) is in an interference fit with the first groove bottom (1037) and the elastic sealing ring (1035).

4. The shock absorber according to claim 3, wherein the thickness of the elastic sealing ring (1035) is greater than the height of the step surface (1038) between the second groove bottom (1036) and the first groove bottom (1037).

5. The shock absorber according to claim 3 or 4, wherein along the radial direction of the piston body (1033), the outer surface of the piston ring (1034) protrudes outward from the annular groove.

6. The shock absorber according to any one of claims 3 to 5, wherein along the axial direction of the piston body (1033), an annular clamping groove (1039) is formed at least at one side edge of the first groove bottom (1037);
the piston ring (1034) is provided with a skirt edge (10341) corresponding to the annular clamping groove (1039), and the skirt edge (10341) is embedded in the annular clamping groove (1039).

7. The shock absorber according to claim 6, wherein an annular clamping groove (1039) is formed at both side edges of the first groove bottom (1037).

8. The shock absorber according to claim 6 or 7, wherein the annular clamping groove (1039) has an inclined wall surface, and the skirt edge (10341) has an inclined surface corresponding to the inclined wall surface.

9. The shock absorber according to any one of claims 3 to 8, wherein the piston ring (1034) is made of polytetrafluoroethylene (PTFE).

10. The shock absorber according to any one of claims 3 to 9, wherein along the axial direction of the piston body (1033), the width of the elastic sealing ring (1035) is less than or equal to the width of the second groove bottom (1036).

11. The shock absorber according to claim 4, wherein the thickness of the elastic sealing ring (1035) is 105% to 120% of the height of the step surface (1038).

12. The shock absorber according to claim 5, wherein the dimension by which the outer surface of the piston ring (1034) protrudes outward relative to the side surface of the piston body (1033) ranges from 0.05mm to 0.25mm.

13. The shock absorber according to any one of claims 1 to 12, wherein a limiting structure is arranged in the second chamber (802) of the shock absorber cylinder (3), and the limiting structure is configured to limit the compression module (103) so as to restrict expansion of the second sub-chamber (110) when the pressure in the second sub-chamber (110) is greater than that in the first sub-chamber (109).

14. The shock absorber according to claim 13, wherein along the moving direction of the piston valve (4) in the shock absorber cylinder (3), the limiting structure is located on the side of the first inlet (211) and the second outlet (222) that is remote from the piston valve (4).

15. The shock absorber according to claim 13, wherein the limiting structure is a limiting step (111) formed on the inner wall of the second chamber (802);
when the pressure in the second sub-chamber (110) is greater than that in the first sub-chamber (109), the compression module (103) is capable of moving to enlarge the second sub-chamber (110) and abutting against the limiting step (111).

16. The shock absorber according to claim 1, wherein a communication channel (102) for inflating the second sub-chamber (110) is arranged on the second sub-chamber (110) of the shock absorber cylinder (3).

17. The shock absorber according to claim 16, wherein the communication channel (102) has a one-way valve structure, such that the communication channel (102) forms one-way conduction from the outside to the inside of the shock absorber cylinder (3).

18. The shock absorber according to claim 16, wherein the communication channel (102) has a switch control valve structure, and the switch control valve is configured to control the on-off state of the communication channel (102).

19. The shock absorber according to claim 1, wherein the shock absorber cylinder (3) has an inner cylinder (301) and an outer cylinder (302) surrounding the inner cylinder (301), the first space (8) is a cylindrical cavity in the inner cylinder (301), and the second space (9) is a cylindrical cavity between the inner cylinder (301) and the outer cylinder (302);
an inner cavity hole (7) is arranged on the inner cylinder (301), and the first chamber (801) is in communication with the second space (9) through the inner cavity hole (7).

20. The shock absorber according to claim 19, wherein the piston valve (4) comprises a piston valve body (401), the piston valve body (401) forms a sealed contact with the inner surface of the first space (8), along the moving direction of the piston valve (4) in the shock absorber cylinder (3), the inner cavity hole (7) is located on the side of the piston valve (401) that is away from the second chamber (802).

21. The shock absorber according to claim 19, wherein a plurality of the inner cavity holes (7) being arranged on the inner cylinder (301) along the circumferential direction surrounding the first space (8).

22. The shock absorber according to claim 19, wherein a partition plate (105) is formed on the shock absorber cylinder, along the moving direction of the piston valve (4), the partition plate (105) is located at the end of the outer cylinder (302) close to the second chamber (802), and the partition plate (105) closes the end of the second space (9) to isolate the second chamber (802) from the second space (9).

23. The shock absorber according to claim 22, wherein a guide assembly (5) is covered on the first end of the shock absorber cylinder (3), a part of the guide assembly (5) is embedded in the inner cylinder (301), another part of the guide assembly (5) is embedded in the outer cylinder (302), and the guide assembly (5) forms relative positioning for the inner cylinder (301) and the outer cylinder (302).

24. The shock absorber according to claim 23, wherein an insertion hole is formed on the guide assembly (5);
the shock absorber further comprising a piston rod (402), the piston valve body (401) is disposed on the piston rod (402), the piston rod (402) extends into the inner cylinder (301) through the insertion hole of the guide assembly (5), the piston valve body (401) is in sealing contact with the inner surface of the inner cylinder (301) to divide the first space (8) into a first chamber (801) and a second chamber (802), and the first chamber (801) and the inner cavity hole (7) are located on the side of the piston valve body (401) close to the first end.

25. The shock absorber according to claim 24, wherein the shock absorber comprising a limiting member (403), the limiting member (403) is arranged on the piston rod (402);
the piston valve (401) is movable between a first position and a second position in the shock absorber cylinder (3), when the piston valve body (401) is located at the first position, the volume of the first chamber (801) is a first volume, when the piston valve body (401) is located at the second position, the volume of the first chamber (801) is a second volume, and the first volume is greater than the second volume.

26. The shock absorber according to claim 25, wherein when the piston valve body (401) is located at the second position, the limiting member (403) abuts against the guide assembly (5) to limit the piston valve (4).

27. The shock absorber according to claim 25, wherein when the piston valve body (401) is located at the first position, the piston valve body (401) abuts against the partition plate (105) to limit the piston valve (4).

28. The shock absorber according to claim 25, wherein the limiting member (403) is sleeved and fixed on the piston rod (402).

29. The shock absorber according to claim 22, wherein a first oil outlet (104) in communication with the second space (9) is formed on the outer cylinder (302), the first oil outlet (104) is butted with the first outlet (212), and the first oil outlet (104) comprises a plurality of through holes;
a second oil outlet (106) in communication with the first sub-chamber (109) is formed on the shock absorber cylinder (3), the second oil outlet (106) is butted with the second outlet (222), and the second oil outlet (106) comprises a plurality of through holes.

30. The shock absorber according to claim 29, wherein the plurality of through holes of the first oil outlet (104) are arranged in an arc shape;
and/or, the plurality of through holes of the second oil outlet (106) are arranged in an arc shape.

31. The shock absorber according to claim 29, wherein a first oil inlet (108) in communication with the first sub-chamber (109) is formed on the shock absorber cylinder (3), the first oil inlet (108) is butted with the first inlet (211), and the first oil inlet (108) and the first oil outlet (104) are distributed on both sides of the partition plate (105) in a position-corresponding manner;
a second oil inlet (107) in communication with the second space (9) is formed on the outer cylinder (302), the second oil inlet (107) is butted with the second inlet (221), and the second oil inlet (107) and the second oil outlet (106) are distributed on both sides of the partition plate (105) in a position-corresponding manner.

32. The shock absorber according to claim 1, wherein the compression module (103) is an air bag module (1032), the air bag module (1032) dividing the second chamber (802) into a first sub-chamber (109) and a second sub-chamber (110), when the pressure in the first sub-chamber (109) is greater than that in the second sub-chamber (110), the air bag module (1032) is configured to be deformable to compress the second sub-chamber (110).

33. A suspension system, comprising the shock absorber according to any one of claims 1 to 32.

34. A vehicle, wherein the vehicle is equipped with the suspension system according to claim 33.
